# EUROPEAN PATENT SPECIFICATION

(11) **EP 3 323 274 B1**
(45) Date of publication and mention of the grant of the patent: **13.11.2019**
(21) Application number: 16732594.3
(22) Date of filing: 24.06.2016
(51) Int. Cl.: H05B 33/08, H05B 37/02

(54) **A LIGHTING UNIT AND A METHOD OF CONTROLLING THE SAME**
BELEUCHTUNGSEINHEIT UND VERFAHREN ZUR STEUERUNG DAVON
UNITÉ D'ÉCLAIRAGE ET PROCÉDÉ DE COMMANDE DE CELUI-CI

(30) Priority: 16.07.2015 EP 15177082
(43) Date of publication of application: 23.05.2018
(73) Proprietor: Signify Holding B.V., 5656 AE Eindhoven (NL)
(72) Inventor: VERBAKEL, Frank, 5656 AE Eindhoven (NL); VAN OS, Jacobus, Petrus, Johannes, 5656 AE Eindhoven (NL); DE SAMBER, Marc, Andre, 5656 AE Eindhoven (NL)
(74) Representative: Vanden Wyngaert, Hilbrand
(86) International application number: PCT/EP2016/064695
(87) International publication number: WO 2017/009022

(56) References cited:
- WO-A2-2011/008251
- WO-A2-2012/122306
- US-A1- 2002 047 624
- US-A1- 2010 096 993

## Description

### FIELD OF THE INVENTION

This invention relates to controllable lighting.

### BACKGROUND OF THE INVENTION

The most basic control system for controlling lighting is to use traditional wired light switches. The light switches are used to control the switching of lights on and off in conventional lighting armatures.

Recently wireless control has been introduced as a mechanism for controlling the switching of light sources, and optionally other functions such as dimming control or color control. This wireless control can be implemented in many different ways.

US 8 660 436 discloses the use of coded light to enable advanced control of light sources and transmit information using light sources. Coded light includes embedded invisible identifiers in the light output of luminaires. These identifiers allow for the identification and strength estimation of the individual local illumination contributions. This can be applied in light control applications such as commissioning, light source selection and interactive scene setting. It can also be used for other communication signals, such as communicating sensor data to a central controller.

Wireless communication protocols may instead be used to implement remote controlled lighting solutions, such as the Zigbee protocol.

It is also known to make use of energy harvesting switch modules which generate enough power when they are actuated to produce and transmit a wireless command to a luminaire. This avoids the need for a fixed wiring infrastructure and enables switch locations to be set in a flexible way.

The communication between the switch and the light sources is typically based on software protocols to program and control the light settings.

All current solutions require a dedicated remote controller and receiver.

LED light sources are developed to have lifetimes of 40,000 hours and more. The light source is thus designed still to be functional after 10 years. However, this lifetime is likely to exceed the expected lifetime of the software used. Thus, the software protocols may no longer be supported over such a long period.

The need for dedicated remote control devices gives rise to the potential problem that devices can become lost, broken or outdated. Some users also have concerns with the generation of radio frequency (RF) signals in their home environment, so that RF controlled lighting may not be attractive to those users.

Current RF solutions communicate with a central control unit in the lighting armature. From this central control unit, wires are used to turn on and off particular lighting units (such as spots) within a lighting grid. When increasing the size of the luminaire, the wiring becomes more complex and relatively expensive.

US2010/096993A1 discloses a lighting unit comprising: a light-emitting element; a feedback system for collecting information representative of operational characteristics of the light-emitting element and for generating signals representative of said information; and a drive and control system receiving these signals from the feedback system for regulating input power of the light-emitting element, and generating and sending control signals to the light-emitting element. Therewith, US2010/096993A1 aims to maintain a given intensity and chromaticity of the light-emitting element.

### SUMMARY OF THE INVENTION

The invention is defined by the claims.

According to the invention there is provided a lighting unit according to claim 1.

The lighting unit may further be adapted to receive an external signal from an source external to the lighting unit and adapted to turn on the light source in response to the received external signal. This lighting unit can thus be turned on using a signal which is received from an external source, and then be maintained on using optical feedback from the light source itself.

In this way, light emission is continued even after the switch-on signal is removed. This makes it possible to "write" patterns into a lighting wall with an external device.

In one set of examples, an external device provides an optical signal as the first external input. It may comprise a torch or laser pointer. The external input signal may then be detected by the light source arrangement. In another set of examples, the external and optical feedback then takes over to maintain the on state. The lighting unit may then comprise a further sensor arrangement for sensing the first external input in the form of a non-light input. The first external input may in this example comprise motion, sound or ultrasound.

A large area distributed lighting system may be based on a set of the lighting units, and the light output from the individual lighting units can be switched on and off by a shared remote device such as a remote light source, for example by pointing the light source at (or near) the lighting unit to be controlled.

For example, the first external inputs for the array of light sources may together comprise a light pattern projected onto the lighting unit. In this way, a large area system may be written with a desired light output pattern by projecting the pattern onto the system, effectively programming the system using light. The system may for example comprise a wearable item, which may be "programmed" to display a desired image such as a logo, by projecting the logo onto the item once, after which it is sustained.

There is no need for software, protocols and microprocessors to turn on the light source or keep the light source turned on, as in the most simple examples light energy (or touch control) is used to turn on the light source and light energy is used to keep the light source on. Neither is there a need for a wired switching signal connection to the lighting unit. An advantage of lighting units as described herein is that they offer a significant cost down in the bill of material of the lighting unit (no microprocessors, no memory, no embedded software etc.), almost undressing the lighting unit to a limited number of basic components allowing light to be switched on and kept on. In the lighting units described herein, the light sensor arrangement directly controls the on state of the light source, i.e. the light sensor arrangement directly links to the light source without an intermediate mircoprocessor or controller first processing the sensor signal and then generating a light source drive signal. In embodiments, an output from the light sensor arrangment directly connects to an input of the light source (e.g. the light source drive signal), in which case the light sensor arragement output signal is used as the light source switching signal.

The light source is typically an LED or an array of LEDs. In embodiments, the lighting unit may comprise a plurality of light sources or LEDs controlled by a single light sensor arrangement in optical feedback with one (or more) of the plurality of light sources or LEDs. A large luminaire comprising a plurality of light sources or LEDs therefore only needs one the light sources to provide optical feedback to the light sensor arrangment in order for all light sources or LEDs of the luminaire to be maintained on.

Multiple lighting units may be used to form or lighting arrangement or a light spot array with small spacing, such as below 20 mm or with large spacing such as above 20 mm. A system with a smaller spacing may be used to create high resolution light emitting devices for example for displaying information or images, and larger spacing may be used to create ambient lighting panels for example integrated in ceilings, walls or other decorative elements in the living environment.

An external remote controller may be used, such as a light source which is designed to provide a particular beam size. A high resolution beam enables a writable light light panel to be formed, and a low resolution beam enables a more coarsely controllable lighting system to be produced such as a ceiling light. Another option, for turning on all light sources in a room, is to produce the external input by another light source such as another ceiling light. This may be used to trigger all other light sources sequentially within the range of the ceiling light or within range of each other. In other words, for turning on all light sources in a room, a lighting unit may receive an external input to turn on a the light source of that particlular lighting unit from a light of another lighting unit already turned on and in optical line of sight of the particular lighting unit. In this way an external input, such as a light beam or a touch signal, for one lighting unit will switch the light source on for that lighting unit and subsequently triggers all other light sources from all other lighting units which are in optical line of sight of the light emitted by the already turned on lighting unit to also turn on. The lighting units triggering each other may be adjacent lighting units or distant lighting units, as long as the light emitted by the first lighting unit (the initiator or master unit) can be received and detected by the sensor arrangement of a second lighting unit (the responder or slave unit) in the sequence.

The system may be used to write a light pattern on a large surface. In this case, the sensor arrangement should be insensitive to the status of the neighboring light sources, for example by having physical walls or shades between light sensors. Each light source may have two or more associated sensors, for example one for a feedback path based on the light source and the other one for the external signal.

The light sensor arrangement may be adapted to turn on the light source in response to an external light input for example with an intensity which exceeds the ambient light levels. Thus, the external light may be of the same type as general ambient light levels, but with a higher intensity. In this way, the same sensor may be used for sensing the external trigger as for the feedback control. The external light may instead be a different wavelength of light to general ambient light so that a first sensor portion is for sensing the external light and a second sensor portion is for feedback control. A broadband sensor may be used to detect a range of wavelengths including both the external light and the light output of the light source.

The light sensor arrangement may be adapted to turn on the light source in response to an external light input with a recognizable pulse pattern. This provides another way of distinguishing between ambient light and the external light used to control the lighting unit.

When an array of light sources and associated light sensor arrangements is provided, a data input may be used to provide a shared data setting for all light sources of the array. The data input is used to provide a setting, such as intensity and/or color, and the light sources are then controlled to be on or off based on the external control.

The array of light sources may comprise light sources of different colors controllable by the same external light input or controllable by different external light inputs. This enables color control by selecting combinations of light sources to be activated.

The optical feedback path may comprise a diffuser or reflector, for directing some of the light output to the sensor.

The light sensor arrangement may be adapted to turn off the light source in response to a second external light input different to the first external light input.

A reset is needed to turn the light off, and this enables the lighting unit to be turned off remotely as well. Alternatively, a hard reset switch may be provided.

Other external commands may be used for the reset, including non-light external inputs such as a sound command, a motion detection signal or a time delay.

The invention also provides a lighting system comprising:
a lighting unit as defined above; and
an external controller for providing a light output for reception by the light sensor arrangement for controlling at least the turning on of the light source or light sources of the lighting unit.

The external controller may comprise a first light source for providing a first light output for turning on the light source or light sources of the lighting unit, and a second light source for providing a second light output for turning off the lighting source or light sources of the lighting unit.

A power switch may instead be provided for interrupting power to the lighting unit for turning off the light source or light sources.

A power switch may instead be provided for interrupting power to the lighting unit for turning off the light source or light sources.

Examples in accordance with another aspect of the invention provide a method of controlling a lighting unit according to claim 13.

The light source may be turned on in response to:
an external light input with an intensity which exceeds the ambient light levels; or an external light input with a recognizable pulse pattern or frequency; or
a non-light external input.

The light source may be turned off in response to:
a second external (light) input different to the first external light input; or
a switched interruption of power to the lighting unit; or
a non-light external input.

The non-light external input may in each case be a sound command, a motion detection signal or a timed signal such as a time delay.

### BRIEF DESCRIPTION OF THE DRAWINGS

Examples of the invention will now be described in detail with reference to the accompanying drawings, in which:
Fig. 1 shows a first example of lighting unit and external controller;
Fig. 2 shows a first example of control circuit;
Fig. 3 shows a second example of lighting unit and external controller;
Fig. 4 shows how a lighting panel may be controlled in different ways;
Fig. 5 shows a second example of control circuit;
Fig. 6 shows a third example of lighting unit; and
Fig. 7 shows a control method.

The invention provides a lighting unit, comprising a light source and a light sensor arrangement. An optical feedback path is provided from the light source (or another light source of an array) to the light sensor arrangement. The light source is turned on in response to an external input and is maintained on as a result of the optical feedback path. This lighting unit can be be turned on using an external signal (such as an external light signal) which is received from an external source, and then maintained on using optical feedback from the light source itself. This makes it possible to control a collection of lighting units distributed over an area using an external device such as a torch or laser pointer, without the need for complex electronic protocols and complex control wiring.

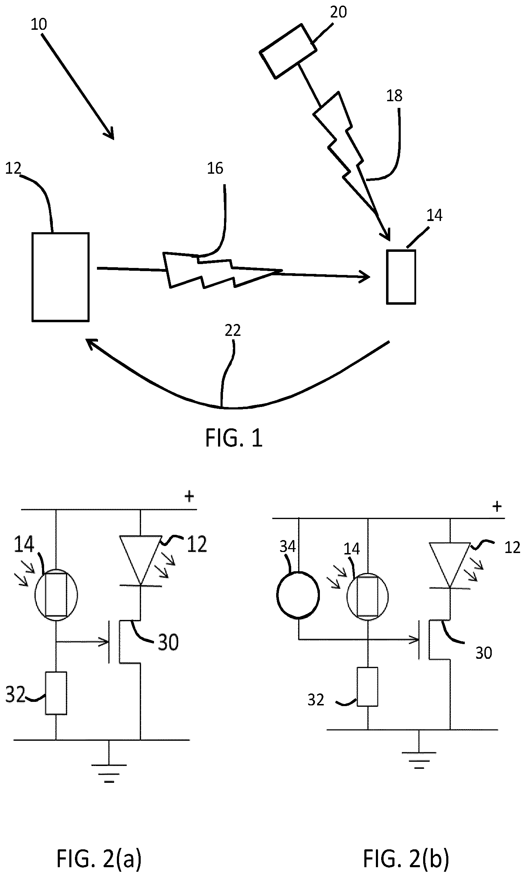

Figure 1 shows the general operation of a lighting unit 10.

The lighting unit 10 comprises a light source 12 such as an LED or LED array, and a light sensor arrangement 14. There is an optical feedback path 16 from the light source to the light sensor arrangement. The light sensor arrangement is also adapted to receive an external input 18 from an external remote controller 20. In some examples, this external input 18 is also optical so that the remote controller is al light source, but it may be a touch input, a motion detection input, a sound input, or an ultrasound input, for example.

If a non-optical external input is used, the unit 10 will have a further sensor for detecting the non-optical input (such as touch or sound) in addition to the optical sensor arrangement 14. The remote controller 20 then comprises a different type of signal source, such as a sound source, or even just a finger of a user, or a sound made by a user.

In response to detection of the external input, such as by light detection as in the example shown, the sensor turns on the light source 12, as represented by arrow 22.

The system will be described based on examples which make use of an optical external control signal 18 as shown in Figure 1, but the general operation is the same even when the external input 18 is non-optical. Optical feedback is still used to maintain the light source 12 in an illuminated state.

The light sensor arrangement 14 in these examples is adapted to turn on the light source in response to an external light input 18 and then maintain the light source on in response to light output from the light source 12 so that the external trigger is no longer needed. Essentially, the system combines external control with positive internal feedback.

The external remote controller 20 can simply be a light source, with no need for software protocols to be adhered to.

In one set of examples, the output of the external remote controller simply needs to be distinguishable from ambient light light sources. This discrimination between ambient light and external control light may be achieved in various ways.

A first option is for a threshold light intensity to be required before the sensor operates the light source. This threshold will be high enough to exceed ambient light levels but low enough to be reached by a suitable controller (such as a laser pen) and by the light source output, which is in close proximity and therefore of a high intensity. In this case, the light sensor arrangement may be responsive to a single range of wavelengths which includes the external remote controller and the light source output.

A second option is for the light received from the external remote controller to be of a specific wavelength. The light sensor arrangement may be responsive to this wavelength for example by using wavelength selective filters. There may then be a first light sensor portion for receiving the external light input and a second light sensor portion for receiving the light source output light. In this way, the different sensor portions (which may be separate discrete sensors) are tuned to the particular light they are designed to sense.

A third option is for the light received from the external remote controller to comprise a recognizable pulse sequence. In this case, the light may have a wavelength which overlaps with the ambient light wavelength range.

There is no need for software, protocols and microprocessors, as light energy is used to turn on the light source. The light source is typically an LED or an array of LEDs.

Instead of distinguishing between ambient light and control light, the external input may itself be an ambient signal rather than a different signal generated by a remote controller 20. For example, changes in daylight conditions will result in different ambient light levels, and these changes can be used as the external input 18. For example, the switching may be dependent on ambient light levels or light color. When evening comes, more red in the spectrum may for example be detected, to make the system switch on.

Figure 2(a) shows a first example of suitable control circuit.

The circuit comprises the sensor 14 in the form of a light sensitive resistor which connects a high voltage rail to the gate of an n-type field effect transistor (FET) 30. The transistor is in series with the light source 12 between voltage lines. The sensor functions as a pull up device to pull up the gate of the transistor when the resistance is sufficiently low. A shunt resistor 32 completes the circuit, so that the two resistors 14, 32 function as a voltage divider, with the output voltage reaching the transistor threshold when sufficient light is received. When the transistor is turned on, the light source is turned on.

A similar circuit may be based on a p-type FET, or on an npn or pnp bipolar transistor.

The light sensor may instead be implemented as a photodiode or a phototransistor, and the light sensor may be formed with or without color filters (such as visible, ultraviolet, infrared filters).

Figure 2(b) shows a second example of suitable control circuit. It is the same as the circuit of Figure 2(a) but includes a second sensor 34 in parallel with the sensor 14.

The second sensor 34 may be for detecting a non-light external input, so the second sensor may be a sound sensor, a motion sensor or a touch sensor. The initial turn on can then be performed by alternative input signals. The two sensors 14, 34 may both be light sensors, one for sensing a specific external light input and one for the feedback mechanism.

The light source 12 is shown as a single LED, but it may of course be an array of LEDs or other types of light source.

The power for the LED 12 is supplied by an external power source, which may be on grid or off grid (e.g. solar powered or battery powered).

This circuit can for example be incorporated in a small footprint surface mount package, for example in the form of a multi-chip module with integrated LED.

The external light trigger can be in the form of a light pulse of short duration. The time required depends on the response time of the sensor and LED.

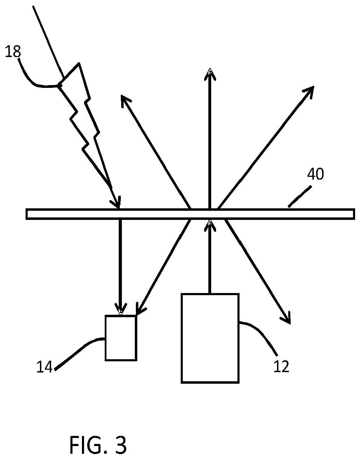

Figure 3 shows that the optical feedback path between the light source 12 and sensor 14 may include a diffusor 40 (or reflector or other light direction element) to direct the feedback signal to the sensor 14.

By tuning the light threshold, which can be achieved with the resistor 32 in Figure 2, the lighting unit can be made insensitive or non-responding to natural ambient light.

Another option is to place the light sensor arrangement 14 for the internal feedback mechanism in such a way that only direct LED light is captured. Thus, there may be an externally facing sensor for the external remote control signal and an internally facing sensor for the internal feedback mechanism.

A further option is to introduce additional intelligence into the light detection mechanism. An LED may be operated in pulsed mode if it is driven by a switch mode power supply. A circuit can thus be used that is only sensitive to this switch mode frequency. In this way, the internal sensor may be able to distinguish between light output from the light source and ambient light even if they have the same wavelength and intensity.

The external remote controller may then also generate pulsed light at the frequency which will be detected by the sensor. While this requires a more specific design of external controller, it is still a simple device that does not need a microcontroller or software.

A system may be formed with multiple light sources.

With light sources in a light spot array with small spacing, such as below 20 mm, a high resolution light emitting device may be formed for example for displaying information or images. The lighting system may for example be on a wall, and a pattern of lights can be turned on by light brushing the wall with the external remote optical controller. This provides the effect of an illuminated painting, and gives freedom to set a desired aesthetic appearance. By brushing over the wall in a kind of painting methodology, the close proximity to the light sources enables accurate and high resolution control.

For small spacing, the light sensor and associated control circuit may be integrated into the same die package / module as the LED light source or even monolithic integration is possible. Each LED is then part of an integrated circuit which includes the optical control system.

A larger spacing, such as above 20 mm, may be used to create ambient lighting panels for example integrated in ceilings, walls or other decorative elements in the living environment. This may make use of separate light source components and light sensor components, and it allows more freedom in designing the optical coupling between the light source and light sensor as well as optical isolation between different lighting units.

In all cases, rather than individually activating light sources, an image may be projected onto the light source array, and the light sources will then turn on to replicate the image.

Alternatively, the external input can be produced by another (ceiling) light source, triggering all light sources to turn on sequentially, when they are within range.

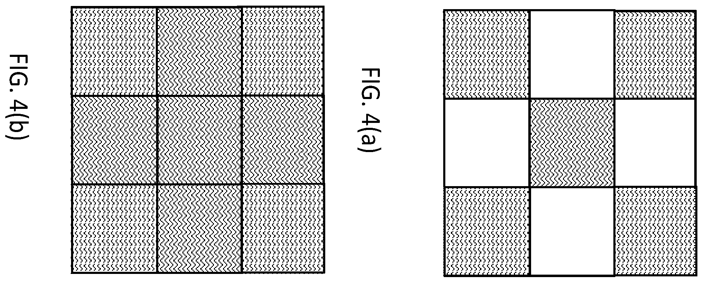

Figure 4 shows a 3 x 3 array of lighting sources together forming a ceiling light panel. In Figure 4(a) five of the light sources have been turned on, and in Figure 4(b) all nine have been turned on.

The light compartments for the different light sources may be separated to prevent cross talk of light so that the optical feedback paths remain isolated. This allows single elements to be turned on separately.

Different applications will require different external remote controller designs. These differences may relate to the light output intensity and beam width. A narrow high resolution beam enables a high resolution writable light light panel to be formed, and a broad low resolution beam enables a more coarsely controllable light to be produced such as a ceiling light.

For low resolution control, segmented lighting units may be controlled by a remote directional light source such as a torch, or wand. The light source can be of any type (with a light output wavelength and intensity within a suitable range) so does not need to be dedicated to the specific system. For example, the system may be designed to be controllable by a particular lighting effect from personal mobile devices such as a flash light. This makes controlling the lighting unit future proof. A specific application loaded onto the mobile device may be used to modify the light effect of the device in a particular way so that the light output matches the sensing functionality.

The lighting system may have light sources of different colors. The light sources of one color may for example be controlled by a first type of external signal. This external signal may comprise a light output from the remote controller of that particular color, or there may be a separate control wavelength associated with each color. The internal feedback path makes use of a light sensor portion which is sensitive to the particular light output color.

Thus, there may be one shared light sensor for receiving the external remote controller light and the internal light or else each light sensor arrangement may have one portion designed for receiving the external light and one portion designed for the internal feedback system.

Color filtered light sensors may be used, and the light sources may comprise color LEDs. This enables a system to be formed with separately addressable colors.

It will be desired at a certain time to turn off the lights, so that the internal feedback control needs to be interrupted.

The reset can be performed in several manners.

The most simple approach is to use a hard manual switch, turning the current off. In this case, there is remote control for turning on but manual control only for turning off.

Alternatively, remote control may also be used to turn off the lights again using a light controlled reset.

For example, a different wavelength of light may be used as a reset command. Infrared (IR) light may be used to trigger a device for inverting the feedback mechanism.. This inverter device functions as part of the light sensor arrangement. During the illumination of the inverter device, the current in the sensor is strongly reduced, decreasing the observed light output of the light source and disrupting and cancelling the feedback loop. This reset function may for example make use of a pulse of IR light.

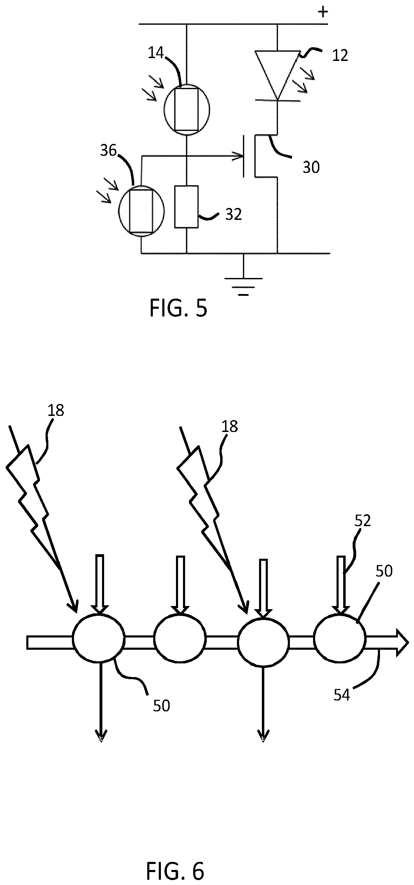

Figure 5 shows a circuit for implementing both light controlled turning on and turning off of the light source.

The circuit of Figure 5 corresponds to that of Figure 2(a) but includes a turn off device in the form of a light sensitive resistor 36. When light is detected by the light sensitive resistor 36, the voltage on the gate of the transistor 30 is pulled down by the reduced resistance, thereby to turn off the transistor. The light sensitive resistor 14 then also increases in resistance so that after removal of the external light, the light source remains off.

The two light sensitive resistors may be sensitive to the same type of light, but be shielded and directed differently, so that the second sensor 36 is shielded from the direct light from the light source. Alternatively, they may respond to different types of light (for example different wavelength or different pulse patterns). The light sensitive resistor may also be replaced by a different type of sensor, such as a resistor which is sensitive to sound or motion.

As mentioned above, the circuitry for processing the light input (both external and internal) may be integrated with the light source (e.g. an RGB LED) into a single integrated circuit package. In addition, a compact control logic circuit that based on only one data signal can configure a light output characteristic of the light source, (e.g. light color or amount of light output) may also be provided in the single integrated package. Such integrated package may be considered to be an intelligent LED unit or pixel. Figure 6 shows an array of such packages 50, each receiving a power supply 52.

All packages 50 receive a common data signal 54. This data signal determines the color or the amount of light which is emitted from the package 50. For switching on individual units an external initiating light signal 18 is required in the manner explained above. Thus, all packages which receive an external light signal will then emit the light as governed by the data signal. All the others will stay off.

Thus, a data input may be used to provide a shared data setting for all light sources of the array.

This approach may be used to update light settings for a selected lighting unit only. For example, a new setting may be provided to the data line 54. Only those lighting units which receive an external remote control light input are then turned on to the new setting, or else changed to the new setting. In this way, different light units can be set to different settings. A lighting unit will remember its current setting (including off or a previous setting) until it is activated externally. It then adopts the current setting on the data line 54.

For example, the data line may be set to a first color (e.g. red). The pixels desired to be red are then activated using the external remote controller. The data line is then set to a second color (e.g. blue). The pixels that are desired to be blue are then activated. The same procedure is then carried out for green. The light sensor may be a wideband sensor so that any color setting enables the internal feedback mechanism to function.

The system reduces complexity (for example data speed requirement is reduced) and increases the speed of switching and improves synchronization of pixels.

As an alternative to color control, a system may illuminate with a default light level and will increase light output at those areas where an external remote control input is received.

Even with more intelligent functionality as described above, the external remote controller remains simple and only using light output and not any electronic communication protocols.

The general idea of controlling all light units separately is described above. This gives the option to have more light at a specific location when needed, for example when reading.

However, other arrangements are possible. The system may for example be designed to switch on fully in response to a single input command. Switching on the light in one element may then generate sufficient light in order to light up neighboring elements. In this case, there is an optical feed forward path from the light source of the one element to the light sensor arrangement of the other element. This will repeat until the whole luminaire or large area lighting system is on. Additional capacitors may be used to build in time delays to provide desired aesthetic visual effects when turning on. For example all lighting points in a room could be turned on in a gradual manner. Various lighting effects become possible without complex wiring and they do not need adjustments to existing wiring.

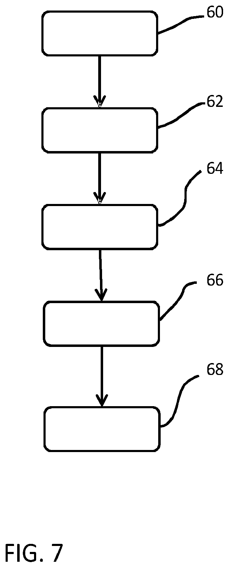

Figure 7 shows the control method for controlling a lighting unit.

In step 60, a first external input to the lighting unit is provided.

In step 62, the first external input is sensed. For an external optical signal, the sensing is with a light sensor arrangement of the lighting unit.

In step 64, a light source of the lighting unit is turned on in response to the first external light input.

In step 66, the light source is maintained on in response to sensing by a light sensor arrangement of the light output from the light source.

In step 68, the light source is subsequently turned off in response to a second external light input different to the first external light input or a switched interruption of power to the lighting unit.

In the examples above, the reset is described as triggered by the external input or by turning off power. Other mechanisms may be used, such as a motion detector (to turn off the lights when no motion is detected for a certain time). Thus, automatic ways of turning off the lights may be implemented. Another example is for a light intensity threshold to be set for ambient light (e.g. using a sensor shielded from the direct output of the light source, rather than the internal feedback sensor) so that the lighting unit turns off when there is bright daylight. This may be based on visible light or UV radiation detection.

An example of a touch input as the external control signal has been given above. This may for example be used in flexible lighting arrays, such as wearable lighting devices, i.e. clothing with integrated lighting. Another approach, as mentioned above, which is of particular interest for wearable devices, is to project a light pattern onto the device, so that a light pattern is programmed into the device. This may be a logo or other information, which is then displayed by the wearable device.

The system may be used to communicate information. For example a lamp pole may be turned on using a torch with a certain frequency. The lamp pole will then start emitting light with with the same frequency, and the feedback path maintains the lamp post turned on. By monitoring when other frequencies are detected (such as the headlights of a car), this information may be collected and processed. For example, the lamp post may then provide information about the times when vehicles passed the lamp post.

A small number of basic circuits have been shown for implementing the optical feedback control and the response to an external input. Many different circuit possibilities are possible. For, example, the circuits shown are based on controlling a voltage applied to the gate (or base) of a transistor. Circuits which are based on current injection based on input of an external signal, for example to charge a capacitor, may also be used. Many possibilities will be apparent to those skilled in the art. The circuit may be implemented without the use of a processor, even if a frequency detection is employed. Frequency detection may for example be based on analogue filtering.

## Claims

1. A lighting unit, comprising:
a light source (12);
a light sensor arrangement (14); and
an optical feedback path (16) from the light source to the light sensor arrangement;
a transistor (30) in series with the light source (12);
wherein the lighting unit is adapted to receive a first external input (18) from a source external to the lighting unit for turning on the light source, wherein the light sensor arrangement (14) is adapted to sense the first external input (18) and turn on the light source;
**characterized in that**
the light sensor arrangement is adapted to maintain the light source switched on in response to light output from the light source sensed by the light sensor arrangement through the optical feedback path (16),
wherein an output from the light sensor arrangement is directly connected to a gate of the transistor, so as to directly control an on state of the light source via said transistor.

2. A lighting unit a claimed in claim 1, said first external input being an external light input, and wherein the light sensor arrangment is further adapted:
to turn on the light source in response to the external light input with an intensity which exceeds the ambient light levels or a frequency which is distinguishable from ambient light; or
to turn on the light source in response to the external light input with a recognizable pulse pattern.

3. A lighting unit as claimed in claim 1, comprising a further sensor arrangement (34) for sensing the first external input in the form of a non-light input, wherein the further sensor arrangement (34) is adapted to turn on the light source in response to the first external input (18).

4. A lighting unit as claimed in any preceding claim, wherein the optical feedback path comprises a diffuser (40) or reflector.

5. A lighting unit as claimed in any preceding claim, wherein the light sensor arrangement is adapted to turn off the light source in response to a second external input different to the first external input.

6. A lighting unit as claimed in claim 5, when dependent on claim 2, wherein the first and second external inputs are optical.

7. A lighting arrangement comprising an array of lighting units according to claim 1 to 6, each lighting unit comprising a light source and associated light sensor arrangement.

8. A lighting arrangement as claimed in claim 7, wherein the first external input for the array of lighting units comprises a light pattern projected onto the array of lighting units.

9. A lighting arrangement as claimed in claim 7 or 8, comprising a data input (54) adapted to provide a shared data setting for all light sources of the array.

10. A lighting system comprising:
a lighting unit as claimed in any of the claims 1 to 6 or a lighting arrangement according to any of the claims 7 to 9; and
an external controller (20) for providing a light output for reception by the light sensor arrangement for controlling at least the turning on of the light source of the lighting unit or light sources of the lighting arrangement.

11. A system as claimed in claim 10, wherein the external controller (20) comprises a first light source for providing a first light output for turning on the light source or light sources, and a second source for providing a second light output for turning off the lighting source or light sources.

12. A system as claimed in claim 10, further comprising a power switch for interrupting power to the lighting unit or lighting arrangement for turning off the light source or light sources.

13. A method of controlling a lighting unit, comprising:
providing a first external input to the lighting unit;
sensing the first external input;
turning on a light source of the lighting unit in response to the first external input; and
maintaining the light source switched on in response to light output from the light source sensed by a light sensor arrangement through an optical feedback path, wherein an output from the light sensor arrangement directly connects to a gate of a transistor in series with the light source, so as to directly control an on state of the light source via said transistor.

14. A method as claimed in claim 13, comprising turning on the light source in response to:
an external light input with an intensity which exceeds the ambient light levels; or
an external light input with a recognizable pulse pattern or frequency; or
a non-light external input.

15. A method as claimed in claim 13 or 14, comprising:
turning off the light source in response to:
a second external light input different to the first external light input; or
a switched interruption of power to the lighting unit; or
a non-light external input.

## Patentansprüche

1. Beleuchtungseinheit, umfassend:
eine Lichtquelle (12);
eine Lichtsensoranordnung (14); und
einen optischen Rückführpfad (16) von der Lichtquelle zu der Lichtsensoranordnung;
einen Transistor (30) in Serie mit der Lichtquelle (12);
wobei die Beleuchtungseinheit angepasst ist, um eine erste externe Eingabe (18) von einer Quelle, die zur Beleuchtungseinheit extern ist, zu empfangen, um die Lichtquelle einzuschalten, wobei die Lichtsensoranordnung (14) angepasst ist, um die erste externe Eingabe (18) zu erfassen und die Lichtquelle einzuschalten;
**dadurch gekennzeichnet, dass**
die Lichtsensoranordnung angepasst ist, um die Lichtquelle als Reaktion auf Lichtausgabe von der Lichtquelle, die von der Lichtsensoranordnung über den optischen Rückführpfad (16) erfasst wurde, eingeschaltet zu halten,
wobei eine Ausgabe von der Lichtsensoranordnung direkt mit einem Gate des Transistors verbunden ist, um direkt einen eingeschalteten Zustand der Lichtquelle über den Transistor zu steuern.

2. Beleuchtungseinheit nach Anspruch 1, wobei die erste externe Eingabe eine externe Lichteingabe ist, und wobei die Lichtsensoranordnung weiter angepasst ist, um:
die Lichtquelle als Reaktion auf die externe Lichteingabe mit einer Intensität einzuschalten, die die Pegel des Umgebungslichts übersteigt, oder einer Frequenz, die vom Umgebungslicht unterscheidbar ist; oder
die Lichtquelle als Reaktion auf die externe Lichteingabe mit einem erkennbaren Impulsmuster einzuschalten.

3. Beleuchtungseinheit nach Anspruch 1, umfassend eine weitere Sensoranordnung (34) zum Erfassen der ersten externen Eingabe in der Form einer Nicht-Lichteingabe, wobei die weitere Sensoranordnung (34) angepasst ist, um die Lichtquelle als Reaktion auf die erste externe Eingabe (18) einzuschalten.

4. Beleuchtungseinheit nach einem der vorstehenden Ansprüche, wobei der optische Rückführpfad einen Diffusor (40) oder Reflektor umfasst.

5. Beleuchtungseinheit nach einem der vorstehenden Ansprüche, wobei die Lichtsensoranordnung angepasst ist, um die Lichtquelle als Reaktion auf eine zweite externe Eingabe, die von der ersten externen Eingabe unterschiedlich ist, auszuschalten.

6. Beleuchtungseinheit nach Anspruch 5, wenn von Anspruch 2 anhängig, wobei die erste und die zweite externe Eingabe optisch sind.

7. Beleuchtungsanordnung, umfassend eine Matrix von Beleuchtungseinheiten nach Anspruch 1 bis 6, wobei jede Beleuchtungseinheit eine Lichtquelle und eine dazugehörige Lichtsensoranordnung umfasst.

8. Beleuchtungsanordnung nach Anspruch 7, wobei die erste externe Eingabe für die Matrix von Beleuchtungseinheiten ein auf die Matrix von Beleuchtungseinheiten projiziertes Lichtmuster umfasst.

9. Beleuchtungsanordnung nach Anspruch 7 oder 8, umfassend eine Dateneingabe (54), die angepasst ist, um eine gemeinsame Dateneinstellung für alle Lichtquellen der Matrix bereitzustellen.

10. Beleuchtungssystem, umfassend:
eine Beleuchtungseinheit nach einem der Ansprüche 1 bis 6 oder eine Beleuchtungsanordnung nach einem der Ansprüche 7 bis 9; und
eine externe Steuereinheit (20) zum Bereitstellen einer Lichtausgabe zum Empfang durch die Lichtsensoranordnung zum Steuern von mindestens dem Einschalten der Lichtquelle der Beleuchtungseinheit oder Lichtquellen der Beleuchtungsanordnung.

11. System nach Anspruch 10, wobei die externe Steuereinheit (20) eine erste Lichtquelle zum Bereitstellen einer ersten Lichtausgabe zum Einschalten der Lichtquelle oder Lichtquellen und eine zweite Quelle zum Bereitstellen einer zweiten Lichtausgabe zum Ausschalten der Beleuchtungsquelle oder Lichtquellen umfasst.

12. System nach Anspruch 10, weiter umfassend einen Ein-Aus-Schalter zum Unterbrechen der Stromversorgung für die Beleuchtungseinheit oder Beleuchtungsanordnung zum Ausschalten der Lichtquelle oder Lichtquellen.

13. Verfahren zum Steuern einer Beleuchtungseinheit, umfassend:
Bereitstellen einer ersten externen Eingabe für die Beleuchtungseinheit;
Erfassen der ersten externen Eingabe;
Einschalten einer Lichtquelle der Beleuchtungseinheit als Reaktion auf die erste externe Eingabe; und
Eingeschaltethalten der Lichtquelle als Reaktion auf Lichtausgabe von der Lichtquelle, die von der Lichtsensoranordnung über einen optischen Rückführpfad erfasst wurde,
wobei eine Ausgabe von der Lichtsensoranordnung direkt mit einem Gate eines Transistors in Serie mit der Lichtquelle verbindet, um direkt einen eingeschalteten Zustand der Lichtquelle über den Transistor zu steuern.

14. Verfahren nach Anspruch 13, umfassend Einschalten der Lichtquelle als Reaktion auf:
eine externe Lichteingabe mit einer Intensität, die die Pegel des Umgebungslichts übersteigt; oder
eine externe Lichteingabe mit einem erkennbaren Impulsmuster oder Frequenz; oder
eine externe Nicht-Lichteingabe.

15. Verfahren nach Anspruch 13 oder 14, umfassend:
Ausschalten der Lichtquelle als Reaktion auf:
eine zweite externe Lichteingabe, die von der ersten externen Eingabe unterschiedlich ist; oder
eine geschaltete Unterbrechung der Stromversorgung für die Beleuchtungseinheit; oder
eine externe Nicht-Lichteingabe.

## Revendications

1. Unité d'éclairage comprenant :
une source de lumière (12) ;
un agencement de capteur de lumière (14) ; et
un trajet de retour optique (16) de la source de lumière à l'agencement de capteur de lumière ;
un transistor (30) en série avec la source de lumière (12) ;
dans laquelle l'unité d'éclairage est à même de recevoir une première entrée externe (18) d'une source externe à l'unité d'éclairage pour mettre en marche la source de lumière, dans laquelle l'agencement de capteur de lumière (14) est à même de détecter la première entrée externe (18) et de mettre en marche la source de lumière ;
**caractérisée en ce que** l'agencement de capteur de lumière est à même de maintenir la source de lumière commutée en marche en réponse à la lumière délivrée par la source de lumière captée par l'agencement de capteur de lumière à travers le trajet de retour optique (16),
dans laquelle une sortie de l'agencement de capteur de lumière est directement connectée à une porte du transistor de manière à commander directement un état de marche de la source de lumière via ledit transistor.

2. Unité d'éclairage selon la revendication 1, dans laquelle ladite première entrée externe est une entrée de lumière externe et dans laquelle l'agencement de capteur de lumière est en outre à même de :
mettre en marche la source de lumière en réponse à l'entrée de lumière externe avec une intensité qui dépasse les niveaux de lumière ambiante ou une fréquence qui ne peut se distinguer de celle de la lumière ambiante ; ou
mettre en marche la source de lumière en réponse à l'entrée de lumière externe avec un motif pulsé reconnaissable.

3. Unité d'éclairage selon la revendication1, comprenant un autre agencement de capteur (34) pour capter la première entrée externe sous la forme d'une entrée autre que de la lumière, dans laquelle l'autre agencement de capteur (34) est à même de mettre en marche la source de lumière en réponse à la première entrée externe (18).

4. Unité d'éclairage selon l'une quelconque des revendications précédentes, dans laquelle le trajet de retour optique comprend un diffuseur (40) ou un réflecteur.

5. Unité d'éclairage selon l'une quelconque des revendications précédentes, dans laquelle l'agencement de capteur de lumière est à même d'interrompre la source de lumière en réponse à une seconde entrée externe qui est différente de la première entrée externe.

6. Unité d'éclairage selon la revendication 5, dans la mesure où elle dépend de la revendication 2, dans laquelle la première et la seconde entrée externe sont optiques.

7. Agencement d'éclairage comprenant un réseau d'unités d'éclairage selon les revendications 1 à 6, chaque unité d'éclairage comprenant une source de lumière et un agencement de capteur de lumière associé.

8. Agencement d'éclairage selon la revendication 7, dans lequel la première entrée externe pour le réseau d'unités d'éclairage comprend un motif lumineux projeté sur le réseau d'unités d'éclairage.

9. Agencement d'éclairage selon la revendication 7 ou 8, comprenant une entrée de données (54) qui est à même de fournir un réglage partagé de données pour toutes les sources de lumière du réseau.

10. Système d'éclairage comprenant :
une unité d'éclairage selon l'une quelconque des revendications 1 à 6 ou un agencement d'éclairage selon l'une quelconque des revendications 7 à 9 ; et
un dispositif de commande externe (20) pour fournir une sortie lumineuse pour la réception par l'agencement de capteur de lumière afin de commander au moins la mise en marche de la source de lumière de l'unité d'éclairage ou des sources de lumière de l'agencement d'éclairage.

11. Système selon la revendication 10, dans lequel le dispositif de commande externe (20) comprend une première source de lumière pour fournir une première sortie lumineuse afin de mettre en marche la ou les sources de lumière et une seconde source pour fournir une seconde sortie lumineuse pour interrompre la ou les sources d'éclairage.

12. Système selon la revendication 10, comprenant en outre un commutateur de puissance pour interrompre l'alimentation de l'unité d'éclairage ou de l'agencement d'éclairage afin d'interrompre la ou les sources de lumière.

13. Procédé de commande d'une unité d'éclairage comprenant :
la fourniture d'un première entrée externe à l'unité d'éclairage ;
la détection de la première entrée externe ;
la mise en marche d'une source de lumière de l'unité d'éclairage en réponse à la première entrée externe ; et
le maintien de la source de lumière commutée en marche en réponse à la sortie lumineuse de la source de lumière détectée par un agencement de capteur de lumière à travers un trajet de retour optique, dans lequel une sortie de l'agencement de capteur de lumière se connecte directement à une porte d'un transistor en série avec la source de lumière de manière à commander directement un état de marche de la source de lumière via ledit transistor.

14. Procédé selon la revendication 13, comprenant la mise en marche de la source de lumière en réponse à :
une entrée de lumière externe avec une intensité qui dépasse les niveaux de lumière ambiante ; ou
une entrée de lumière externe avec un motif pulsé ou une fréquence reconnaissable ; ou
une entrée externe autre que de la lumière.

15. Procédé selon la revendication 13 ou 14, comprenant :
l'interruption de la source de lumière en réponse à :
une seconde entrée de lumière externe différente de la première entrée de lumière externe ; ou
une interruption de puissance commutée avec l'unité d'éclairage ; ou
une entrée externe autre que de la lumière.
